# EUROPÄISCHE PATENTSCHRIFT

(11) **EP 0 697 795 B1**
(45) Veröffentlichungstag und Bekanntmachung des Hinweises auf die Patenterteilung: **29.03.2000**
(21) Anmeldenummer: 95112349.6
(22) Anmeldetag: 05.08.1995
(51) Int. Cl.: H04N 9/31

(54) **Anordnung zum Einstellen einer Bilddarstellungseinrichtung mit einem Gehäuse**
Arrangement for adjusting a display device with a housing
Arrangement pour l'ajustage d'un dispositif d'affichage d'image avec un boîtier

(30) Priorität: 17.08.1994 DE 4429060
(43) Veröffentlichungstag der Anmeldung: 21.02.1996
(73) Patentinhaber: DEUTSCHE THOMSON-BRANDT GMBH, 78048 Villingen-Schwenningen (DE)
(72) Erfinder: Storz, Martin, D-78048 Villingen-Schwenningen (DE)

(56) Entgegenhaltungen:
- EP-A- 0 442 161
- EP-A- 0 526 653
- PATENT ABSTRACTS OF JAPAN vol. 16, no. 409 (P-1412), 28.August 1992 & JP-A-04 138491 (SANYO), 12.Mai 1992,
- PATENT ABSTRACTS OF JAPAN vol. 18, no. 67 (P-1686), 3.Februar 1994 & JP-A-05 281512 (FUJITSU), 29.Oktober 1993,
- PATENT ABSTRACTS OF JAPAN vol. 14, no. 484 (P-1120), 22.Oktober 1990 & JP-A-02 195384 (SEIKO), 1.August 1990,
- PATENT ABSTRACTS OF JAPAN vol. 17, no. 695 (E [1480] , 20.Dezember 1993 & JP-A-05 236487 (SANYO), 10.September 1993,

## Beschreibung

Die Erfindung geht aus von einer Anordnung zum Einstellen einer Bilddarstellungseinrichtung mit einem Gehäuse gemäß dem Oberbegriff des Anspruchs 1.

Vorbekannte Lösungen bestehen aus Blechteilen, denen jeweils Einstellteile (Exzenter- oder Gewindebolzen) und Führungsteile (Nietenbolzen, Stifte und/oder Hebel) zugeordnet sind. Pro Einstellrichtung (Achse) ist ein Blechteil mit den entsprechenden Einstell- oder Führungsteilen notwendig. Für einen Einstellmechanismus vorbekannter Art sind deshalb vier solcher Blechteile notwendig und einander schichtweise zugeordnet. Das ergibt einen sehr komplexen mechanischen Aufbau, der sehr genaue Einzelteile und sorgfältigste Montage voraussetzt. Nachteilig ist auch die Toleranzgrenze durch die vielen einzelnen Bauteile. Der große Platzbedarf erschwert eine kompakte Bauweise und erhöht die Kosten des Objektivs, weil eine größere Schnittweite erforderlich ist. Der Werkzeugaufwand ist groß und die Montage kompliziert.
Ferner ist aus EP-A 0 526 653 A1 ein LCD Projektor bekannt, der Mittel zum Einstellen der LCD Einheit enthält.

Der Erfindung liegt die Aufgabe zugrunde, eine Vereinfachung eines Einstellmechanismus einer Bilddarstellungsvorrichtung zu schaffen. Diese Aufgabe wird durch die im Anspruch 1 angegebenen Merkmale der Erfindung gelöst. Vorteilhafte Weiterbildungen der Erfindung sind in den Unteransprüchen angegebenen. Erfindungsgemäß werden Teile des Einstellmechanismus in das Gehäuse integriert und/oder Einstellmittel derart angeordnet, daß diesen nicht nur die Einstellfunktion einer Achse zukommt, sondern auch die Führungsfunktion einer weiteren Achse. Die Einstellung mit den Einstellmitteln wird in mehreren Achsen, vorzugsweise in vier Achsen ermöglicht. Die Einstellmittel werden aus Exzenterbolzen gebildet. Führungsstifte dienen zur Führung in einer Achse. Klemmschrauben dienen zum Fixieren der justierten Achsen. Langlöcher dienen als Führungshilfen in den verschiedenen Achsen.

Mit dem ersten Exzenterbolzen ist es möglich, eine erste Achse in horizontaler, Rückwärts- und Vorwärtsrichtung zu verschieben. Mit dem zweiten Exzenterbolzen ist eine Verschiebung der zweiten Achse in horizontaler, Rechts- und Linksrichtung möglich. Mit dem dritten Exzenterbolzen ist es möglich, die weiteren zwei Achsen vertikal und radial einzustellen.

In einem Projektionsfernsehgerät werden mehrere Bilddarstellungseinrichtungen verwendet. Diese Bilddarstellungseinrichtungen sind insbesondere aus einem LCD (Liquid Crystal Display) gebildet, auch LCD-Licht-Ventil (LCD-Light-Valve) genannt. Um eine deckungsgleiche Projektion der Kanäle Rot, Grün, Blau zu ermöglichen, ist es notwendig, eine Justierung und Fixierung der LCDs vorzunehmen. Vorteilhaft bei der erfindungsgemäßen Lösung ist der einfache Aufbau mit einem absoluten Minimum von Einzelteilen, eine einfache Montage und übersichtliche Einstellvorrichtung. Sehr kleine Toleranzkette, keine präzisen Einzelteile (keine engen Lagertoleranzen) sind erforderlich. Eine kompakte Bauweise, da der Einstellmechanismus außerhalb des optischen Kanals liegt.

In LCD-Projektoren wird das durch die Beleuchtungseinrichtung erzeugte Licht mit Hilfe dichroitischer Spiegel in drei Lichtkanäle (rot, grün, blau) aufgeteilt. In jedem Kanal befindet sich ein monochromes LCD-Light-Valve. Zwischen den LCDs und dem Projektionsobjektiv werden diese drei Kanäle wieder durch dichroitische Spiegel zusammengeführt und über ein Projektionsobjektiv auf eine Projektionsfläche (Leinwand oder Mattscheibenbildschirm) abgebildet. Die drei Teilbilder erzeugen nun durch additive Farbmischung ein Farbbild. Voraussetzung hierzu ist eine deckungsgleiche Positionseinstellung der LCDs. Diese LCD-Einstellung erfolgt in 4 Achsen:
- Entfernung der LCDs zum Projektionsobjektiv (Bildschärfeneinstellung)
- Linien horizontal einstellen
- Höhenposition einstellen
- seitliche Position einstellen
Mit einer derartigen Einrichtung beträgt die erforderliche Einstellgenauigkeit etwa ¼ der Pixelgröße. (Bei einem 2" LCD 16:9 820x560 Pixel beträgt die Pixelgröße 56µm x 46µm.) Diese Einstellung wird durch Klemmschrauben fixiert und bleibt über die ganze LCD-Lebensdauer erhalten.

Durch diese Anordnung und Belegung der Exzenter mit Mehrfachfunktion können weitere komplizierte Blechteile entfallen.

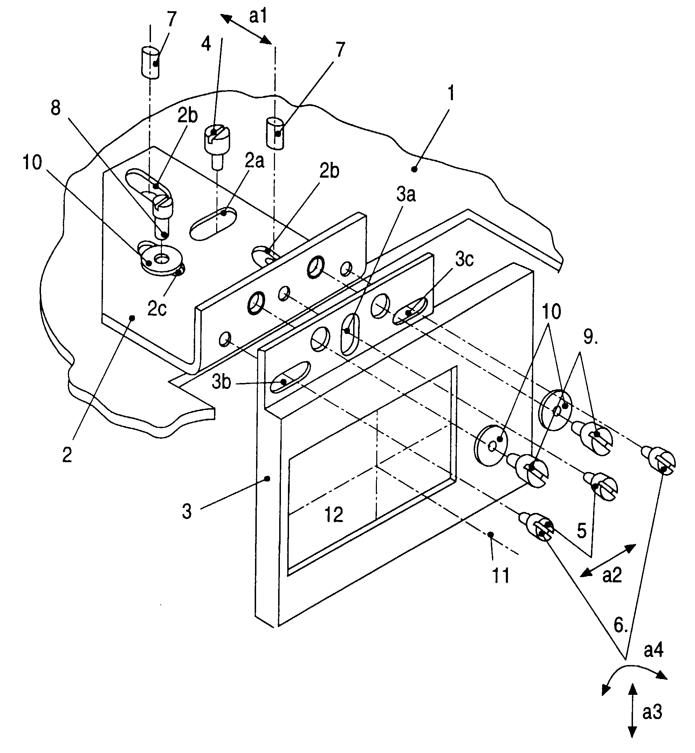

Die Erfindung wird im folgenden anhand der Zeichnung erläutert.

Die Fig. zeigt die Explosionszeichnung einer Bilddarstellungseinrichtung 12 mit dem Gehäuse 3 und den dazugehörenden Befestigungs- und Einstelleinrichtungen. Ein LCD-Light-Valve besitzt ein Gehäuse, um einerseits sämtliche inneren Funktionsgruppen zu halten und zu schützen, und um andererseits eine Befestigung des Light-Valve im Projektor zu ermöglichen. Integriert man nun auch Funktionen des Einstellmechanismus in das Gehäuseteil, welches die Befestigung gewährleistet, so entsteht bei der erfindungemäßen Lösung ein unwesentlicher Mehraufwand von drei Langlöchern 3a, 3b, 3c. Das LCD-Light-Valve 3 wird mit Hilfe eines Winkelblechs 2 mit der Projektorgrundplatte 1 verbunden. Um eine 4-Achsen-Justierung zu ermöglichen, besitzen Winkelblech 2 und Light-Valve 3 Langlöcher, denen Exzenterbolzen, Führungsstifte und Feststellschrauben zugeordnet sind.

Einstellung der Bildschärfe: Das Winkelblech 2 ist, mit Hilfe der in der Grundplatte 1 befestigten Führungsstifte 7, längs der optischen Achse 11 geführt. Der Exzenterbolzen 4 ist in der Grundplatte drehbar befestigt und greift in das Langloch 2a des Winkelblechs 2 ein. Eine Drehung des Exzenterbolzen 4 bewirkt eine Verschiebung des Light-Valves 3 entlang der optischen Achse 11. Nach erfolgter Schärfeeinstellung wird das Winkelblech 2 auf der Grundplatte 1 mit Hilfe mindestens einer Klemmschraube 8 fixiert.

Einstellung von Höhenposition, Horizontalen und seitliche Position: Die Einstellung der Höhenposition und der Horizontalen erfolgt in einem gemeinsamen Vorgang durch Drehung des Exzenters 6. Exzenter 5 bildet dabei die Führung für die Höheneinstellung und gleichzeitig den Drehpunkt für die Horizontaleinstellung. Die Einstellung der seitlichen Position erfolgt durch Drehung des Exzenters 5. Hierbei bildet der Exzenter 6 die Führung. Nach erfolgter Einstellung wird die Position des Light-Valve 3 gegenüber dem Winkelblech 2 mit Hilfe zweier Klemmschrauben 9 fixiert.

## Patentansprüche

1. Anordnung zum Einstellen einer Bilddarstellungseinrichtung (12) mit einem Gehäuse (3) für ein Projektionsfernsehgerät und mit einem Einstellmechanismus, in dem Exzenterbolzen als Einstellmittel benutzt werden, **dadurch gekennzeichnet, daß** Teile des Einstellmechanismusses (3a, 3b, 3c) in das Gehäuse (3) integriert sind, daß die Einstellmittel (4, 5, 6, 7) derart angeordnet sind, daß ihnen nicht nur die Einstellfunktion einer Achse, sondern auch eine Führungsfunktion einer weiteren Achse zukommt, und daß die Einstellmittel (4, 5, 6, 7) eine Einstellung in mehreren Achsen möglich ist.

2. Anordnung nach Anspruch 1, **dadurch gekennzeichnet, daß** eine Einstellung in vier Achsen möglich ist.

3. Anordnung nach einem der vorhergehenden Ansprüche, **dadurch gekennzeichnet, daß** mit dem ersten Exzenterbolzen (4) eine erste Achse in horizontaler, Vorwärts- und Rückwärtsrichtung (a1) verschiebbar ist, und/oder mit den zweiten Exzenterbolzen (5) eine zweite Achse in horizontaler, Rechts- und Linksrichtung (a2) verschiebbar ist und/oder mit den dritten Exzenterbolzen (6) eine weitere Achse in vertikaler Richtung (a3) und eine weitere Achse in radialer Richtung (a4) verschiebbar ist.

4. Anordnung nach einem der vorhergehenden Ansprüche, **dadurch gekennzeichnet, daß** zur Führung der ersten Achse (a1) Führungsstifte (7) vorgesehen sind.

5. Anordnung nach einem der vorhergehenden Ansprüche, **dadurch gekennzeichnet, daß** zum Fixieren der eingestellten Achsen Klemmschrauben (8, 9) vorgesehen sind.

6. Anordnung nach einem der vorhergehenden Ansprüche, **dadurch gekennzeichnet, daß** Langlöcher (2a, 2b, 2c, 3a, 3b, 3c) als Führung für die Justierung in den verschiedenen Achsen vorgesehen sind.

7. Anordnung nach einem der vorhergehenden Ansprüche, **dadurch gekennzeichnet, daß** die Bilddarstellungseinrichtung durch ein LCD gebildet ist.

## Claims

1. Arrangement for setting an image display device (12) with a housing (3) for a projection television set and with a setting mechanism wherein eccentric bolts are used as setting means, characterized in that parts of the setting mechanism (3a, 3b, 3c) are integrated into the housing (3) and that the setting means (4, 5, 6, 7) are arranged in such a way that they assume not only the setting function of one axis but also a guiding function of a further axis, and that the setting means (4, 5, 6, 7) make possible a setting in a plurality of axes.

2. Arrangement according to claim 1, characterized in that a setting in four axes is possible.

3. Arrangement according to one of the preceding claims, characterized in that with the first eccentric bolt (4) a first axis can be displaced in the horizontal, forward and rearward direction (a1), and/or with the second eccentric bolts (5) a second axis can be displaced in the horizontal, right and left direction (a2) and/or with the third eccentric bolts (6) a further axis can be displaced in the vertical direction (a3) and a further axis can be displaced in the radial direction (a4) .

4. Arrangement according to one of the preceding claims, characterized in that guiding pins (7) are provided for guidance of the first axis (a1).

5. Arrangement according to one of the preceding claims, characterized in that clamping screws (8, 9) are provided for fixing the set axes.

6. Arrangement according to one of the preceding claims, characterized in that slots (2a, 2b, 2c, 3a, 3b, 3c) are provided as guidance for the adjustment in the various axes.

7. Arrangement according to one of the preceding claims, characterized in that the image display device is formed by an LCD.

## Revendications

1. Arrangement pour l'ajustage d'un dispositif d'affichage d'image (12) avec un boîtier (3), destiné à un rétroprojecteur, et avec un mécanisme d'ajustage dans lequel des boulons d'excentrique sont utilisés comme dispositif d'ajustage, **caractérisé en ce que** les pièces du mécanisme d'ajustage (3a, 3b, 3c) sont intégrées dans le boîtier (3), **en ce que** les dispositifs d'ajustage (4, 5, 6, 7) sont disposés de sorte que les fonctions d'ajustage d'un axe et de guide d'un autre axe leur incombe et en ce que les dispositifs d'ajustage (4, 5, 6, 7) permettent un ajustage dans plusieurs axes.

2. Arrangement conforme à la revendication 1, **caractérisé en ce qu'**un ajustage dans les quatre axes est possible.

3. Arrangement conforme à l'une des revendications précédentes, **caractérisé en ce qu'**un axe peut être décalé en position horizontale, en avant et en arrière (a1), à l'aide du premier boulon d'excentrique (4) et/ou un deuxième axe peut être déplacé en position horizontale, vers la droite et vers la gauche (a2), à l'aide du deuxième boulon d'excentrique (5) et/ou un autre axe peut être déplacé en position verticale (a3) et en position radiale (a4) à l'aide du troisième boulon d'excentrique (6).

4. Arrangement conforme à l'une des revendications précédentes, **caractérisé en ce que** des chevilles de positionnement (7) sont prévues pour positionner le premier axe (a1).

5. Arrangement conforme à l'une des revendications précédentes, **caractérisé en ce que** des boulons de blocage (8, 9) sont prévus pour fixer les axes ajustés.

6. Arrangement conforme à l'une des revendications précédentes, **caractérisé en ce que** des trous oblongs (2a, 2b, 2c, 3a, 3b, 3c) sont prévus pour servir de guide lors de l'ajustage dans les différents axes.

7. Arrangement conforme à l'une des revendications précédentes, **caractérisé en ce que** le dispositif d'affichage d'image est constitué d'un écran LCD.
